# EUROPEAN PATENT APPLICATION

(11) **EP 4 653 593 A1**
(43) Date of publication of application: **26.11.2025**
(21) Application number: 24744812.9
(22) Date of filing: 12.01.2024
(51) Int. Cl.: D04H 1/728, D04H 1/04, B01D 39/02

(54) **FILTER MANUFACTURING APPARATUS**

(30) Priority: 19.01.2023 KR 20230008149
(71) Applicant: LG Electronics Inc., Yeongdeungpo-gu Seoul 07336 (KR)
(72) Inventor: SHIN, Namgyu, Seoul 08592 (KR); PARK, Hyungho, Seoul 08592 (KR); LEE, Keonwang, Seoul 08592 (KR); KIM, Hongseok, Seoul 08592 (KR)
(74) Representative: Vossius & Partner Patentanwälte Rechtsanwälte mbB
(86) International application number: PCT/KR2024/000624
(87) International publication number: WO 2024/155031

(57) **Abstract**

The present invention relates to a filter manufacturing apparatus. The filter manufacturing apparatus of the present invention comprises: a movement device having a support that moves a base in a first direction; and a spinning device disposed above the support and spinning a solution to the base, wherein the spinning device comprises a first injection device disposed to be spaced apart from the support at a first distance upward, and a second injection device disposed to be spaced apart from the support at second distance upward, the first distance being greater than the second distance.

## Description

### [Technical Field]

The present invention relates to a filter manufacturing apparatus, and more particularly, to an apparatus for manufacturing a filter that can be used in an air purifier or the like.

### [Background Art]

Filters are used in various fields according to the needs of people who want to breathe pleasant air. In addition, filters used in various fields have a structure in which nanofiber layers are stacked thickly to increase air purification performance.

Existing nanofiber spinning is a method of spinning fibers having a single diameter. Existing nanofiber spinning can also be composed of several nanofiber layers having different diameters. However, there is a disadvantage in that thin fibers are spun to reduce pressure loss by fine-tuning the fibers, but a pressure loss reduction effect is reduced if a corresponding fiber is spun with a thickness greater than a certain level.

Korean Patent Registration No. KR 10-1866344 discloses a plurality of inject apparatuses having the same diameter and the same height. However, since the manufacturing apparatus also arranges inject apparatus having the same diameter and the same height, fabrics of the same basis weight are produced in a row. This does not causes a problem in general, but in the case of fabric having a nano-unit fiber diameter, the filling ratio decreases due to continuous spinning of the same basis weight, which reduces the effect (slip effect) of the nano-unit fibers, so that the improvement in pressure loss may be reduced.

### [Disclosure]

### [Technical Problem]

The problem to be solved by the present invention is to provide a filter manufacturing apparatus that has improved filter filling rate and reduced pressure loss.

Another problem of the present invention is to provide a filter manufacturing apparatus that spins fibers of different diameters.

The problems of the present invention are not limited to the problems mentioned above, and other problems that are not mentioned will be clearly understood by those skilled in the art from the description below.

### [Technical Solution]

A filter manufacturing apparatus according to an embodiment of the present invention includes a movement device which has a support that moves a base in a first direction. The filter manufacturing apparatus includes a spinning device which is disposed above the support, and spins a solution to the base.

The spinning device includes a first injection device disposed to be spaced apart from the support by a first distance upward. The spinning device includes a second injection device disposed to be spaced apart from the support by a second distance upward.

The first distance is formed to be greater than the second distance. Accordingly, the diameters of the solution injected onto the upper side of the base can be formed differently.

The spinning device includes an injection device group including a plurality of first injection devices and a plurality of second injection devices. Each of the plurality of first injection devices and the plurality of second injection devices included in the injection device group is spaced apart in a second direction perpendicular to the first direction. Accordingly, the area injected by the first injection device and the area injected by the second injection device can be formed alternately in the second direction.

The first injection device and the second injection device included in the injection device group are disposed alternately in the second direction. Accordingly, the area injected by the first injection device and the area injected by the second injection device can be formed alternately in the first direction and the second direction.

The spinning device includes a plurality of injection device groups spaced apart in the first direction.

Accordingly, the area injected by the first injection device and the area injected by the second injection device can be formed alternately in the first direction and the second direction, respectively.

The first injection device and the second injection device included in the spinning device are disposed alternately in the first direction and the second direction. Accordingly, the area injected by the first injection device and the area injected by the second injection device can be formed alternately in the first direction and the second direction, respectively.

The apparatus further includes a voltage device that applies voltage to each of the first injection device and the second injection device. The voltage device is electrically connected to the first injection device, the second injection device, and the support.

Each of the first injection device and the second injection device includes a cylinder which stores a solution. Each of the first injection device and the second injection device includes a needle which is disposed below the cylinder, and injects the solution stored in the cylinder.

The first injection device includes an additional ground electrode that is disposed to be spaced downward from the needle. Accordingly, the duration of the solution injected from the first injection device can be increased.

The additional ground electrodes are provided as a pair that are disposed to be spaced apart from each other in a direction perpendicular to a vertical direction based on the needle.

The additional ground electrodes includes a first additional ground electrode which is disposed to be spaced downward from the needle. The additional ground electrodes includes a second additional ground electrode which is disposed to be spaced downward from the first additional ground electrode. Accordingly, the duration of the solution injected from the first injection device can be increased.

Each of the first additional ground electrode and the second additional ground electrode is provided as a pair that are disposed to be spaced apart from each other in a direction perpendicular to a vertical direction based on the needle. The distance by which the pair of second additional ground electrodes are spaced apart from each other is formed to be larger than the distance by which the pair of first additional ground electrodes are spaced apart from each other.

A voltage applied to the first additional ground electrode is formed to be higher than a voltage applied to the second additional ground electrode, but lower than a voltage applied to the needle.

The spinning device includes a first injection device group including a plurality of first injection devices spaced apart in a second direction perpendicular to the first direction. The spinning device includes a second injection device group including a plurality of second injection devices spaced apart in the second direction. Accordingly, the area injected by the first injection device and the area injected by the second injection device can be formed alternately in the first direction and the second direction, respectively.

The spinning device includes a plurality of first injection device groups and a plurality of second injection device groups. Each of the plurality of first injection device groups and the plurality of second injection device groups is disposed alternately in the first direction. Accordingly, the area injected by the first injection device and the area injected by the second injection device can be formed alternately in the first direction and the second direction, respectively.

Each of the plurality of first injection device groups is disposed to be spaced apart from each of the plurality of second injection device groups in the first direction. Accordingly, the area injected by the first injection device and the area injected by the second injection device can be formed alternately in the first direction and the second direction, respectively.

Each of the plurality of first injection devices disposed in the first injection device group is disposed to be spaced apart from each of the plurality of second injection devices disposed in the second injection device group in the second direction.

Specific details of other embodiments are included in the detailed description and drawings.

### [Advantageous Effects]

According to the filter manufacturing apparatus of the present invention, there are one or more of the following effects.

First, there is an advantage in that fibers having different diameters are laminated, so that the diameter of some of the fibers that are spun is small, thereby reducing the pressure loss of the filter fabric. In addition, by differentiating the height of the first inject apparatus, the spinning stretching time of the solution injected from the first inject apparatus is lengthened, so that nanofibers of different diameters are deposited, thereby improving the filling rate.

Second, the first inject apparatus and a second inject apparatus can be designed in a multi-pattern form by being alternately disposed, which also produces the effect of reducing the pressure loss.

Third, since the stretching time injected from the spinning apparatus is lengthened, a fine spring-shaped nanofiber is formed to secure space inside the fiber, thereby improving the pressure loss. In addition, there is an advantage in that a longer-distance spinning can be realized by installing an additional ground electrode with a method of making a spring-shaped nanofiber, or a fiber of specific shape can be manufacture by diversifying the shape of the ground electrode.

The effects of the present invention are not limited to the effects mentioned above, and other effects not mentioned can be clearly understood by those skilled in the art from the description of the claims.

### [Description of Drawings]

FIG. 1 is a schematic diagram for explaining a filter manufacturing apparatus according to an embodiment of the present invention.
FIG. 2 is a diagram for explaining the connection relationship and operation of an injection device and a voltage device according to an embodiment of the present invention.
FIG. 3 is a side view for explaining the arrangement of a first injection device and a second injection device according to an embodiment of the present invention.
FIG. 4 is a bottom view for explaining the arrangement of an injection device group including a plurality of first injection devices and a plurality of second injection devices according to an embodiment of the present invention.
FIG. 5 is a bottom view for explaining the arrangement of a first injection device group including a plurality of first injection devices and a second injection device group including a plurality of second injection devices according to another embodiment of the present invention.
FIG. 6 is a bottom view for explaining the arrangement of a first injection device group including a plurality of first injection devices and a second injection device group including a plurality of second injection devices according to another embodiment of the present invention.
FIG. 7 is a diagram for explaining a inject area according to the solution inject of a first injection device and a second injection device of the present invention.
FIG. 8 is a diagram for explaining a inject area according to the solution inject of a first injection device and a second injection device toward the upper side of a moving base of the present invention.
FIG. 9 is a diagram for explaining a inject area according to the solution inject of a first injection device and a second injection device that are swung by a swing device toward the upper side of a moving base of the present invention.
FIG. 10 is a side view for explaining the arrangement of a first injection device and a second injection device according to another embodiment of the present invention.
FIG. 11 is a side view for explaining the arrangement of a first injection device and a second injection device according to another embodiment of the present invention.
FIG. 12 is a diagram for explaining the shape of each needle of a first injection device and a second injection device according to another embodiment of the present invention.

### [Mode for Invention]

Advantages and features of the present disclosure and methods of achieving them will become apparent with reference to the embodiments described below in detail in conjunction with the accompanying drawings. However, the present disclosure is not limited to the embodiments disclosed below, but may be implemented in various different forms, and these embodiments are provided only to allow the disclosure of the present disclosure to be complete, and to completely inform those of ordinary skill in the art to which the present disclosure belongs, the scope of the invention, and the present disclosure is only defined by the scope of the claims. Like reference numerals refer to like elements throughout.

Hereinafter, the present invention will be described with reference to drawings for explaining a filter manufacturing apparatus according to embodiments of the present invention.

Hereinafter, the present invention will be described with reference to drawings for explaining a filter manufacturing apparatus according to embodiments of the present invention.

The filter manufacturing apparatus is an apparatus that manufactures a filter by spinning nanofibers onto a base 2. The filter produced here may also be used in air purifiers, air conditioners, and masks that filter out fine dust. The filter manufacturing apparatus may form a nanofiber layer by spinning nanofibers onto a base support.

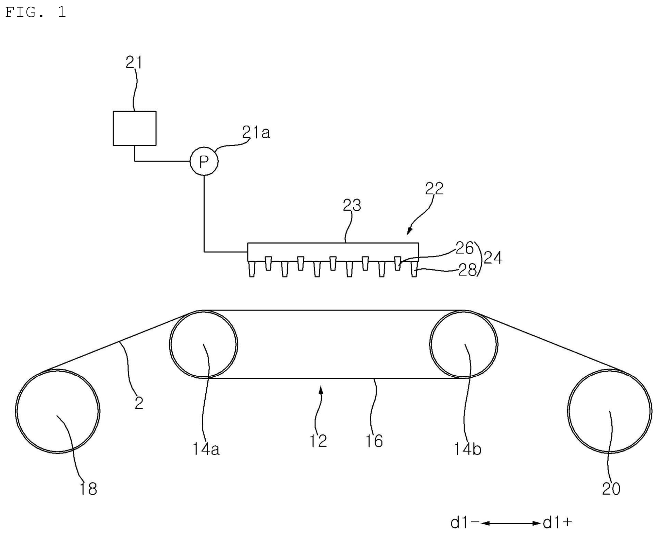

Referring to FIG. 1, the filter manufacturing apparatus includes a spinning device 22 that spins a solution to a support, and a movement device 12 that moves the support disposed on the lower side of the spinning device 22. The filter manufacturing apparatus includes a supply roller 18 that supplies a support, and a recovery roller 20 that recovers the support moved by the movement device 12. The movement device 12 is disposed between the supply roller 18 and the recovery roller 20.

The spinning device 22 includes a plurality of injection devices 24 disposed in a plurality of rows and columns. The spinning device 22 includes a storage tank 21 in which a solution is stored, and a pump 21a that supplies the solution stored in the storage tank 21 to each of the plurality of injection devices 24. The plurality of injection devices 24 may have a structure in which they are connected to each other through a distribution pipe 23.

The movement device 12 is disposed between the supply roller 18 and the recovery roller 20 and moves the base 2 disposed on the lower side of the spinning device 22. The movement device 12 may include a plurality of rollers 14a, 14b and a support 16 that moves by the plurality of rollers 14a, 14b. The base 2 supplied by the supply roller 18 may move to the upper side of the support 16. The support 16 may move the base 2 disposed on the upper side.

Each of the plurality of injection devices 24 may be connected to the storage tank 21. In addition, each of the plurality of injection devices 24 may be connected to the storage tank 21 by using a separate member.

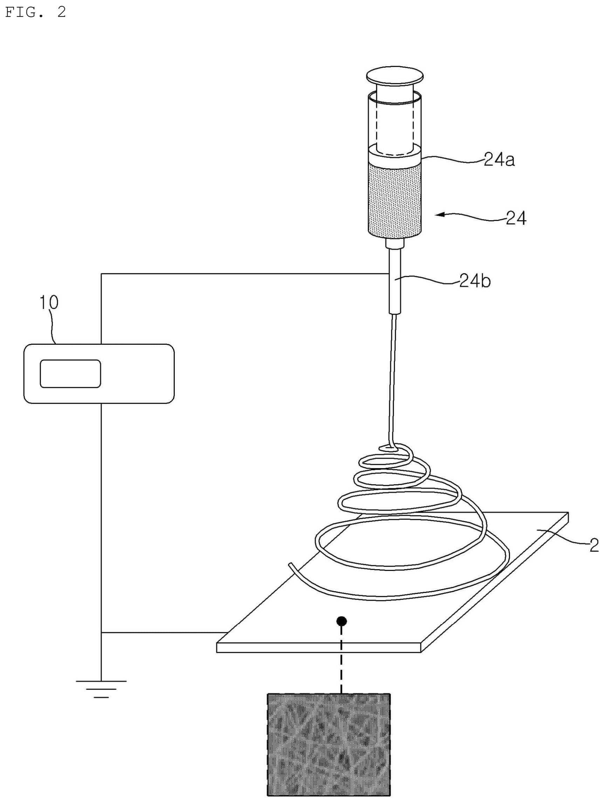

Referring to FIG. 2, the filter manufacturing apparatus includes an injection device 24 that is disposed to be spaced apart from the base 2 and discharges a solution toward the base 2, and a voltage device 10 that applies a high voltage to the injection device 24.

The solution discharged from the injection device 24 may be nanofiberized as the solvent vaporizes in the air. The formed nanofibers may be deposited on the base 2. The nanofibers deposited on the base 2 may form a nanofiber layer.

The injection device 24 may include a cylinder 24a that forms a space for storing the solution, and a needle 24b that discharges the solution stored in the cylinder 24a. The voltage device 10 may be connected to the needle 24b.

The voltage device 10 applies a high voltage to the injection device 24 to form an electric field in the solution injected from the injection device 24. Therefore, an electric field may be formed on the surface of the solution discharged from the injection device 24.

Depending on the amount of solution discharged from the injection device 24 and the voltage applied from the voltage device 10, the solution injected from the injection device 24 may be spun in the shape of fibers. The fibers may be accumulated on the base 2 while rotating according to the electric force.

The voltage device 10 may charge a needle 24b of the injection device 24. The voltage device 10 may charge the solution gathered at the tip of the needle 24b. When the voltage applied to the solution exceeds a threshold voltage Vc, spinning may begin.

The threshold voltage Vc may be a voltage at the time when the electrical force including the mutual electrostatic repulsion and Coulomb force between the surface charges exceeds the surface tension of the solution.

The voltage device 10 may be electrically connected to the movement device 12. The voltage device 10 may charge the movement device 12 that moves the base 2. The movement device 12 may include a support 16. The voltage device 10 may charge the injection device 24 and the support 16 by applying voltage.

For example, the voltage device 10 may charge the injection device 24 to a negative (-), and charge the support 16 to a positive (+). As the injection device 24 is charged, the injected solution may be collected on the charged support 16. Accordingly, the nanofibers may be deposited on the base 2 that is returned along the support 16.

A polymer solution may be used as the solution that is stored in the injection device 24 and discharged.

The discharge amount of the solution injected from the injection device 24 may vary depending on the strength of the voltage applied from the voltage device 10.

The base 2 is disposed on the lower side of the injection device 24. A mesh material may be mounted on the base 2. The solution discharged from the injection device 24 may be spun to the upper side of the mesh material to form a nanofiber filter layer.

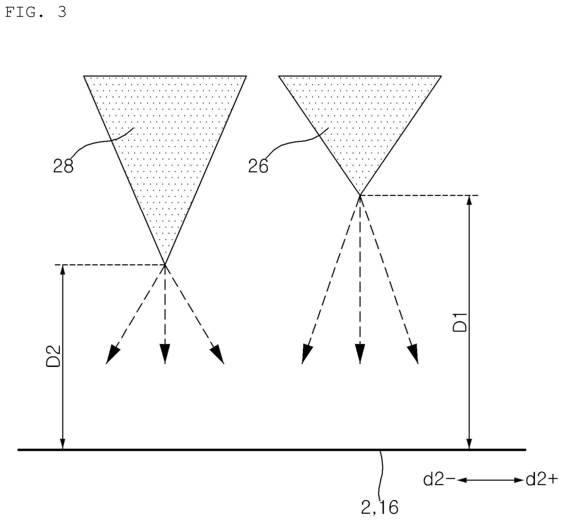

Referring to FIG. 3, the spinning device 22 may include a first injection device 26 spaced apart from the support 16 or the base 2 by a first distance D1, and a second injection device 28 spaced apart from the support 16 or the base 2 by a second distance D2.

Referring to FIG. 3, the first distance D1 may be formed larger than the second distance D2. That is, the lower end portion of the second injection device 28 may be disposed higher than the lower end portion of the first injection device 26.

Accordingly, as the time for the solution injected from the second injection device 28 to reach the support 16 increases, the thickness of the nanofibers accumulated on the base 2 also becomes thinner. In addition, the length of the solution injected from the second injection device 28 may be increased and stacked in a spring shape.

The diameters of the nanofibers accumulated on the base 2 may be formed differently by the solutions injected from the first injection device 26 and the second injection device 28 respectively due to the operation of the spinning device 22.

The spinning device 22 of the present invention includes a spinning apparatus group 30 in which the first injection device 26 and the second injection device 28 are spaced apart from each other in a second direction.

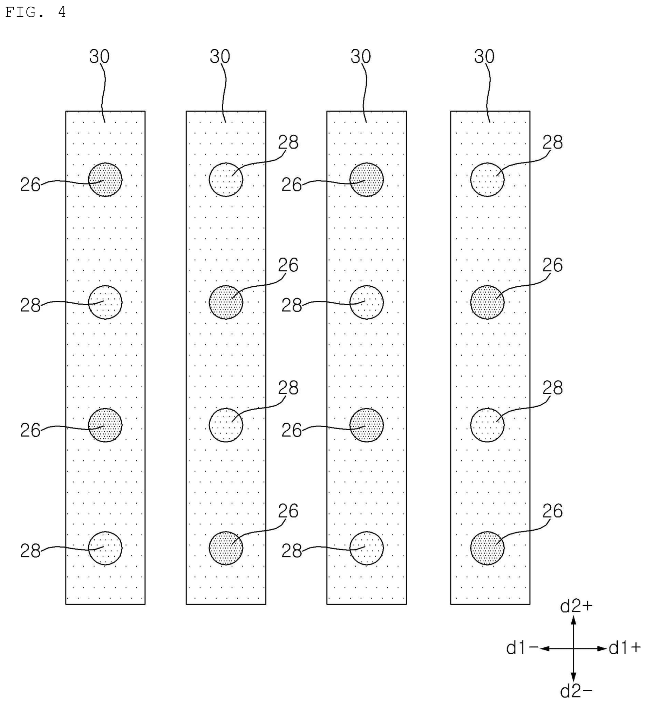

Referring to FIG. 4, the spinning apparatus group 30 includes a plurality of first injection devices 26 and a plurality of second spinning apparatuses 28.

The plurality of first injection devices 26 and the plurality of second injection devices 28 included in the injection device group 30 are respectively disposed to be spaced apart in a second direction perpendicular to the first direction (d1+, d1-) which is the moving direction of the base 2. Each of the first injection device 26 and the second injection device 28 included in the injection device group 30 is alternately disposed.

The injection device 22 includes a plurality of injection device groups 30. The plurality of injection device groups 30 are disposed to be spaced apart in the first direction in which the base 2 moves.

Referring to FIG. 4, the first injection device 26 and the second injection device 28 are alternately disposed in the first direction. That is, the second injection device 28 is disposed before and after the first direction (d1+, d1-) of the first injection device 26 included in the injection device group 30. In addition, the first injection device 26 is disposed before and after the first direction of the second injection device 28 included in the injection device group 30.

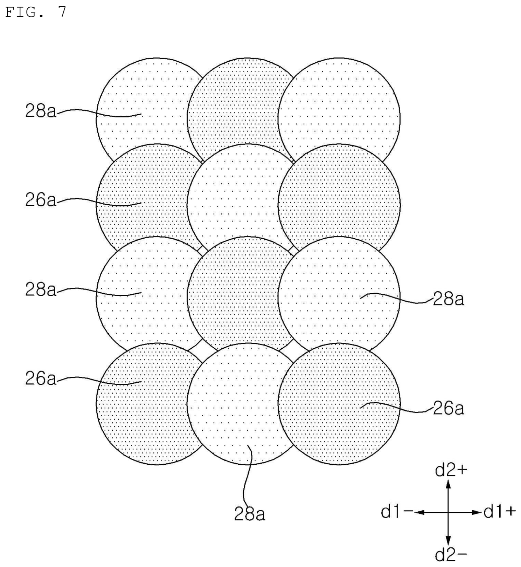

When a solution is injected through the plurality of injection devices 24 included in the spinning device 22 of FIG. 4, as shown in FIG. 7, the solution injected from the first injection device 26 and the solution injected from the second injection device 28 may be formed in a checkered pattern.

That is, a first inject area 26a where the solution is injected by the first injection device 26 and a second inject area 28a where the solution is injected by the second injection device 28 may be formed alternately in the first direction (d1+, d1-) and the second direction (d2+, d2-).

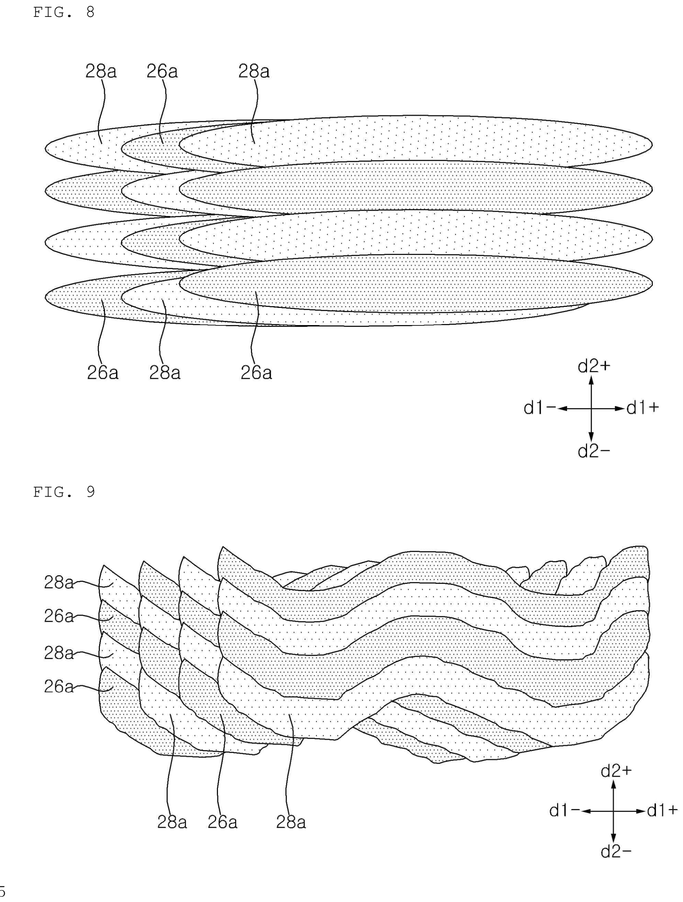

In addition, since the base 2 disposed on the lower side of the spinning device 22 moves in the first direction (d1+, d1-) by the support 16, the solution may be injected in a form as shown in FIG. 8. It may be injected in such a manner that the first inject area 26a and the second inject area 28a alternate in the first direction (d1+, d1-), and alternate in the second direction (d2+, d2-) to be stacked.

The spinning device 22 of the present invention may include a swing device (not shown) that moves a plurality of injection devices 24 left and right in the second direction (d2+, d2-). When the injection device 24 injects a solution, the swing device may swing the injection device 24 left and right in the second direction (d2+, d2-). Accordingly, the solution may be injected in the form of FIG. 9 on the upper side of the base 2 moving along the support 16 in the first direction (d1+, d1-).

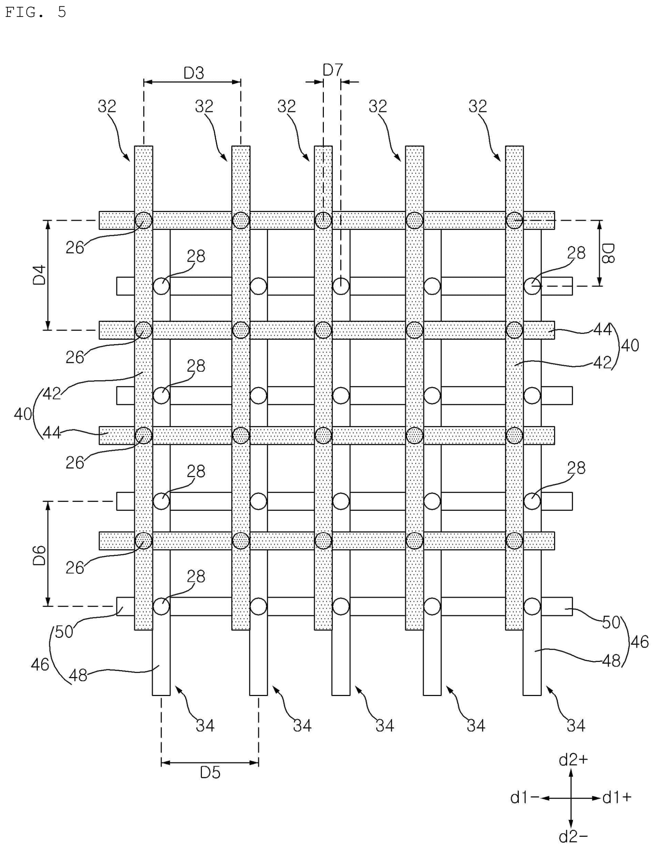

FIG. 5 is a spinning device 22 according to another embodiment.

Referring to FIG. 5, the spinning device 22 includes a first injection device group 32 including a plurality of first injection devices 26 and a second injection device group 34 including a plurality of second injection devices 28.

Referring to FIG. 5, the first injection device group 32 may include a plurality of first injection devices 26 spaced apart in the second direction (d2+, d2-). Each of the plurality of first injection device groups 32 is disposed spaced apart in the first direction.

The distance D3 by which each of the plurality of first injection device groups 32 is spaced apart in the first direction (d1+, d1-) may be formed identically to the distance D4 by which the plurality of first injection devices 26 included in each of the plurality of first injection device groups 32 are spaced apart in the second direction (d2+, d2-).

The plurality of first injection devices 26 included in each of the plurality of first injection device groups 32 may be connected by a first connector 40. The first connector 40 may include a first-first connector 42 that connects each of the plurality of first injection devices 26 included in the first injection device group 32, and a first-second connector 44 that connects each of a plurality of first-first connectors 42.

The first connector 40 may supply a solution to each of the plurality of first injection devices 26 that are connected. In addition, the first connector 40 may have a structure that only connects each of the plurality of first injection devices 26 to each other.

Each of the plurality of first injection devices 26 included in the first injection device group 32 may be connected to the first-first connector 42.

The plurality of first injection device groups 32 may be connected to the first-second connector 44. The first-second connector 44 may connect the plurality of first-first connectors 42 to each other.

Referring to FIG. 5, the second injection device group 34 may include a plurality of second injection devices 28 spaced apart in the second direction (d2+, d2-). Each of the plurality of second injection device groups 34 is disposed spaced apart in the first direction.

The plurality of second injection device groups 34 are disposed spaced apart in the first direction. The distance D5 by which each of the plurality of second injection device groups 34 is spaced apart in the first direction (d1+, d1-) may be formed identically to the distance D6 by which the plurality of second injection devices 28 included in each of the plurality of second injection device groups 34 is spaced apart in the second direction (d2+, d2-).

The plurality of second injection devices 28 included in each of the plurality of second injection device groups 34 may be connected by a second connector 46. The second connector 46 may include a second-first connector 48 that connects each of the plurality of second injection devices 28 included in the second injection device group 34 and a second-second connector 50 that connects each of the plurality of second-first connectors 48.

Each of the plurality of second injection devices 28 included in the second injection device group 34 may be connected by a second-first connector 48.

The plurality of second injection device groups 34 may be connected by the second-second connector 50. The second-second connector 50 may connect the plurality of second-first connectors 48 to each other.

The distance D7 by which the first injection device 26 and the adjacently disposed second injection device 28 are spaced apart in the first direction (d1+, d1-) may be formed differently from the distance D8 spaced apart in the second direction (d2+, d2-). The distance D7 by which the first injection device 26 and the adjacently disposed second injection device 28 are spaced apart in the first direction (d1+, d1-) may be formed smaller than the distance D8 by which the first injection device 26 and the adjacently disposed second injection device 28 are spaced apart in the second direction (d2+, d2-).

The arrangement of the first-first connector 42 and the second-first connector 48 may be disposed to partially overlap or be in contact with each other in the first direction (d1+, d1-), when viewed from the bottom. The lower end of the first injection device 26 may be disposed lower than the second-first connector 48.

The arrangement of the first injection device 26 and the second injection device 28 in FIG. 5 is formed similarly to the arrangement of the first injection device 26 and the second injection device 28 in FIG. 4. Therefore, the inject as in FIG. 7 to FIG. 9 may be performed with the spinning device of FIG. 5.

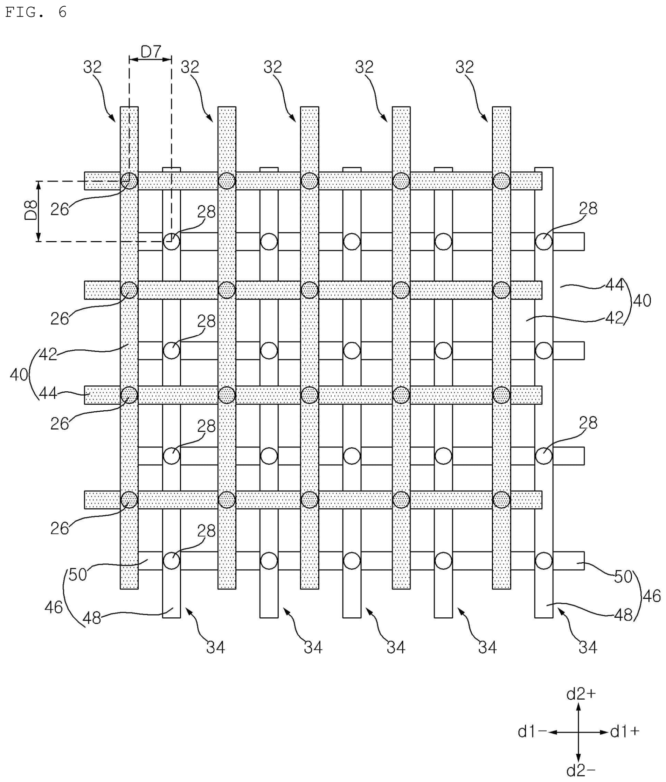

FIG. 6 is a spinning device 22 according to another embodiment of the present invention.

The spinning device according to FIG. 6 includes a first injection device group 32 including a plurality of first injection devices 26 as in FIG. 5, and a second injection device group 34 including a plurality of second injection devices 28.

The first injection device group 32 may include a plurality of first injection devices 26 spaced apart in the second direction (d2+, d2-). Each of the plurality of first injection device groups 32 is disposed spaced apart in the first direction. The second injection device group 34 may include a plurality of second injection devices 28 spaced apart in the second direction (d2+, d2-). Each of the plurality of second injection device groups 34 is disposed spaced apart in the first direction.

The plurality of first injection devices 26 included in each of the plurality of first injection device groups 32 may be connected by the first connector 40. The first connector 40 may include a first-first connector 42 that connects each of the plurality of first injection devices 26 included in the first injection device group 32, and a first-second connector 44 that connects each of the plurality of first-first connectors 42.

The plurality of second injection devices 28 included in each of the plurality of second injection device groups 34 may be connected by the second connector 46. The second connector 46 may include a second-first connector 48 that connects each of the plurality of second injection devices 28 included in the second injection device group 34, and a second-second connector 50 that connects each of the plurality of second-first connectors 48.

The distance D7 by which the first injection device 26 and the adjacently disposed second injection device 28 are spaced apart in the first direction (d1+, d1-) may be formed identical with the distance D8 spaced apart in the second direction (d2+, d2-).

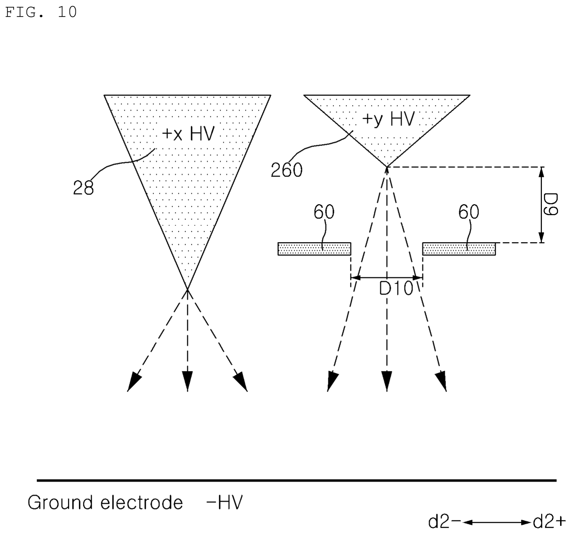

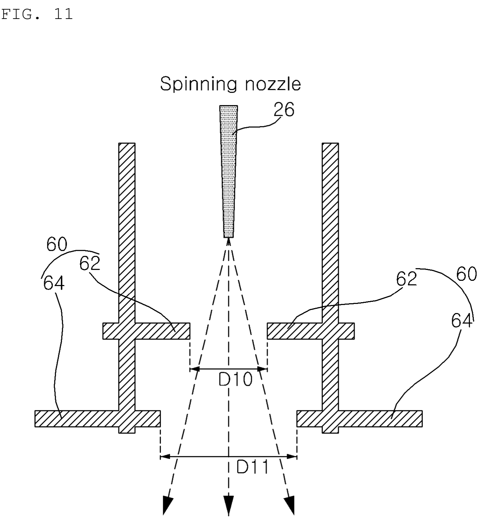

Hereinafter, a second injection device 28 according to another embodiment will be described with reference to FIGS. 10 and 11. The first injection device 26 described in FIGS. 10 and 11 may be applied to the first injection device included in the spinning device 22 described in FIGS. 4 and 6.

The first injection device 26 may include at least one additional ground electrode 60 which is spaced apart downward from the lower end of the needle 24b and has a voltage difference with respect to the voltage applied to the needle 24b. At least one pair of additional ground electrodes 60 are provided. One pair of additional ground electrodes 60 are disposed to be spaced apart from each other in a direction perpendicular to the vertical direction based on the needle 24b. The additional ground electrode 60 may have a ring shape that is opened in the vertical direction from the lower side of the needle 24b.

Referring to FIGS. 10 and 11, the distance D9 by which a pair of additional ground electrodes 60 are spaced downward from the lower end of the needle 24b may be formed to be larger than the distance D10 by which the pair of additional ground electrodes 60 are spaced each other.

The additional ground electrode 60 disposed on the lower side of the needle 24b may change the spinning stretching conditions of the solution injected from the first injection device 26.

The solution injected from the first injection device 26 may be spun with nanofibers in a spring shape, and the stretching time of the nanofibers may be increased through the additional ground electrode 60 disposed on the lower side. That is, the solution injected from the first injection device 26 may be deposited with a thinner diameter on the upper side of the base 2.

The voltage applied to the additional ground electrode 60 may be formed to be 0 V. In addition, the voltage applied to the additional ground electrode 60 may be formed higher than 0 V, but lower than the voltage applied to the needle 24b.

Referring to FIG. 11, the first injection device 26 may include multiple pairs of additional ground electrodes 60 disposed on the lower side of the needle 24b. The first injection device 26 includes a first additional ground electrode 62 and a second additional ground electrode 64 that is spaced apart from the first additional ground electrode 62 downward.

Referring to FIG. 11, the first injection device 26 includes a pair of first additional ground electrodes 62 and another pair of second additional ground electrodes 64.

The distance D11 by which another pair of second additional ground electrodes 64 are spaced each other is formed to be larger than the distance D10 by which the pair of first additional ground electrodes 62 are spaced each other.

The voltage applied to the second additional ground electrode 64 may be formed to be 0 V. In addition, the voltage applied to the second additional ground electrode 64 may be formed to be higher than 0 V, but lower than the voltage applied to the needle 24b.

The voltage applied to the first additional ground electrode 62 may be formed to be higher than the voltage applied to the second additional ground electrode 64 but lower than the voltage applied to the needle 24b.

Each of the first additional ground electrode 62 and the second additional ground electrode 64 may have a ring shape that is opened in the vertical direction from the lower side of the needle 24b. The size of the inner diameter of the first additional ground electrode 62 formed in the ring shape may be formed to be smaller than the inner diameter of the second additional ground electrode 64 formed in the ring shape.

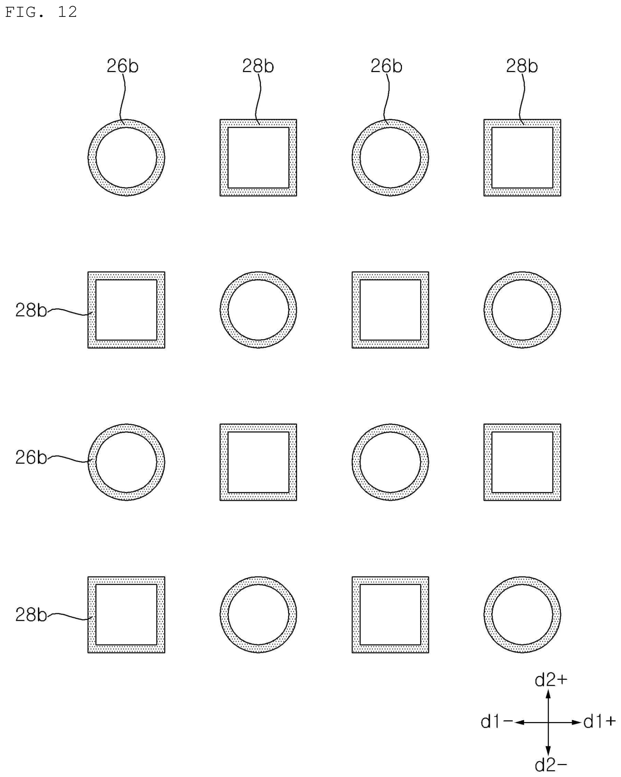

Referring to FIG. 12, the first injection device 26 and the second injection device 28 may have needles of different shapes.

Referring to FIG. 12, the needle 26b of the first injection device 26 may have an internal cross-sectional area with a circular shape. In addition, the needle 28b of the second injection device 28 may have an internal cross-sectional area with a rectangular shape.

Unlike FIG. 12, in a range where the shape of needle of each of the first injection device 26 and the second injection device 28 has a different structure, it is also possible that the shape structure of needle is differently formed. For example, the needle shape of one of the first injection device 26 and the second injection device 28 may have a polygonal structure or a long hole shape, and the needle shape of the other of the first injection device 26 and the second injection device 28 may have a different shape.

Although the present invention has been described with reference to specific embodiments shown in the drawings, it is apparent to those skilled in the art that the present description is not limited to those exemplary embodiments and is embodied in many forms without departing from the scope of the present invention, which is described in the following claims. These modifications should not be individually understood from the technical spirit or scope of the present invention.

## Claims

1. A filter manufacturing apparatus, the apparatus comprising:
a movement device which has a support that moves a base in a first direction; and
a spinning device which is disposed above the support, and spins a solution to the base,
wherein the spinning device comprises:
a first injection device disposed to be spaced apart from the support by a first distance upward; and
a second injection device disposed to be spaced apart from the support by a second distance upward,
wherein the first distance is greater than the second distance.

2. The apparatus of claim 1, wherein the spinning device comprises an injection device group including a plurality of first injection devices and a plurality of second injection devices,
wherein each of the plurality of first injection devices and the plurality of second injection devices included in the injection device group is spaced apart in a second direction perpendicular to the first direction.

3. The apparatus of claim 2, wherein the first injection device and the second injection device included in the injection device group are disposed alternately in the second direction.

4. The apparatus of claim 2, wherein the spinning device comprises a plurality of injection device groups spaced apart in the first direction.

5. The apparatus of claim 1, wherein the first injection device and the second injection device comprised in the spinning device are disposed alternately in the first direction and a second direction perpendicular to the first direction.

6. The apparatus of claim 1, further comprising a voltage device that applies voltage to each of the first injection device and the second injection device,
wherein the voltage device is electrically connected to the first injection device, the second injection device, and the support.

7. The apparatus of claim 1, wherein each of the first injection device and the second injection device comprises:
a cylinder which stores a solution; and
a needle which is disposed below the cylinder, and injects the solution stored in the cylinder,
wherein the first injection device comprises an additional ground electrode that is disposed to be spaced downward from the needle.

8. The apparatus of claim 7, wherein the additional ground electrodes are provided as a pair that are disposed to be spaced apart from each other in a direction perpendicular to a vertical direction based on the needle.

9. The apparatus of claim 7, wherein the additional ground electrodes comprises:
a first additional ground electrode which is disposed to be spaced downward from the needle; and
a second additional ground electrode which is disposed to be spaced downward from the first additional ground electrode.

10. The apparatus of claim 9, wherein each of the first additional ground electrode and the second additional ground electrode is provided as a pair that are disposed to be spaced apart from each other in a direction perpendicular to a vertical direction based on the needle,
wherein a distance by which the pair of second additional ground electrodes are spaced apart from each other is formed to be larger than a distance by which the pair of first additional ground electrodes are spaced apart from each other.

11. The apparatus of claim 10, wherein a voltage applied to the first additional ground electrode is formed to be higher than a voltage applied to the second additional ground electrode, but lower than a voltage applied to the needle.

12. The apparatus of claim 1, wherein the spinning device comprises:
a first injection device group including a plurality of first injection devices spaced apart in a second direction perpendicular to the first direction; and
a second injection device group including a plurality of second injection devices spaced apart in the second direction.

13. The apparatus of claim 12, wherein the spinning device comprises a plurality of first injection device groups and a plurality of second injection device groups,
wherein each of the plurality of first injection device groups and the plurality of second injection device groups is disposed alternately in the first direction.

14. The apparatus of claim 13, wherein each of the plurality of first injection device groups is disposed to be spaced apart from each of the plurality of second injection device groups in the first direction.

15. The apparatus of claim 13, wherein each of the plurality of first injection devices disposed in the first injection device group is disposed to be spaced apart from each of the plurality of second injection devices disposed in the second injection device group in the second direction.
